# FASCICULE DE BREVET EUROPEEN

(11) **EP 0 560 704 B1**
(45) Date de publication et mention de la délivrance du brevet: **19.06.1996**
(21) Numéro de dépôt: 93460011.5
(22) Date de dépôt: 12.03.1993
(51) Int. Cl.: B65G 59/04, B65G 59/10, B65B 43/44

(54) **Dispositif de dépilage automatique de barquettes, et machines équipées d'un tel dispositif**
Vorrichtung zum automatischen Entstapeln von Schalen und mit einer solchen Vorrichtung ausgestattete Maschinen
Device for destacking trays automatically and machines equipped with such a device

(30) Priorité: 12.03.1992 FR 9203137
(43) Date de publication de la demande: 15.09.1993
(73) Titulaire: NIJAL (S.A.), F-56150 Baud (FR)
(72) Inventeur: Grill, Jean-Noel, F-56150 Saint-Barthelemy (FR)
(74) Mandataire: Fournier, Michel Robert Marie

(56) Documents cités:
- EP-A- 0 121 803
- DE-B- 1 218 334
- GB-A- 1 254 197
- GB-A- 2 182 908
- US-A- 3 090 523
- SOVIET PATENTS ABSTRACTS Section PQ, Week 9118, 19 Juin 1991 Derwent Publications Ltd., London, GB; Class Q31, AN 91-130740 & SU-A-1 569 284 (KOREPANOV) 7 Juin 1990

## Description

L'invention concerne un dispositif de dépilage automatique de barquettes comme défini dans le préambule de la revendication 1 (EP-A-0 121 803) et toute machine qui en est équipée.

Il existe sur le marché un grand nombre de dispositifs destinés à séparer, un par un, toute sorte d'objets disposés en pile.

Ces dispositifs peuvent être classés en deux principales catégories selon que l'organe de dépilage est situé sous la pile ou au contraire au-dessus de celle-ci. On trouve donc deux possibilités à savoir un dépilage par le bas et un dépilage par le haut.

La présente invention se situe dans la seconde catégorie et se présente dans l'art connu sous la forme d'une combinaison de trois éléments essentiels, à savoir :
- un chargeur recevant la pile d'objets à dépiler ;
- un organe de préhension disposé au-dessus de la pile et capable de séparer un par un les objets pour les poser à côté, par exemple sur un convoyeur ;
- et enfin, un dispositif capable de remonter la pile, fonctionnant de préférence en synchronisation avec l'opération de dépilage.

La présente invention concerne un tel type de dispositif de dépilage destiné plus particulièrement à dépiler par le haut des barquettes alimentaires devant servir de contenants à différents produits, notamment alimentaires.

Un des premiers problèmes rencontrés dans ces dispositifs qui dépilent par le haut réside dans le positionnement des barquettes par rapport à l'organe de préhension qui, dans le cas des barquettes alimentaires, est le plus souvent une ventouse fonctionnant en dépression.

La première solution venant à l'esprit pour résoudre ce problème est de prévoir des moyens de positionnements des barquettes de telle sorte que celles-ci se trouvent centrés sur un axe vertical passant par celui de la ventouse en position de préhension. Malheureusement, l'axe de dépression étant perpendiculaire à la surface à dépiler, pour peu qu'il y ait une certaine adhérence des barquettes entre elles, ce qui est souvent le cas, il arrive, lors du dépilage, que deux barquettes ou plus, se trouvent soulevées en même temps. Ceci désorganise le bon déroulement de la suite des opérations intervenant en aval.

De plus, ou bien chaque type de barquettes nécessite un chargeur approprié à ses dimensions, ou bien, un chargeur de stockage unique peut être envisagé à condition qu'il soit équipé de moyens de centrage capables d'ajuster à la demande le positionnement de la barquette en fonction de son format. On comprend toutes les difficultés de réglage, les pertes de temps et de volume de stockage que cela entraîne.

La présente invention a pour but de pallier ces inconvénients et concerne un dispositif de dépilage automatique de barquettes palliant ces inconvénients.

Elle concerne également les machines associées destinées par exemple à convoyer les barquettes ainsi dépilées vers un poste de remplissage.

La présente invention concerne plus particulièrement un dispositif de dépilage automatique de barquettes comme défini dans la revendication 1.

L'invention sera mieux comprise à l'aide des explications qui vont suivre et des figures jointes parmi lesquelles :
- les figures 1 et 3 montrent schématiquement un dispositif de dépilage automatique de barquettes selon l'invention, vu respectivement sur le côté et par en-dessus ;
- la figure 2 est un schéma permettant de mieux illustrer l'une des caractéristiques importantes de l'invention ;
- la figure 4 illustre schématiquement la position de l'axe d'aspiration par rapport au fond de la barquette en cours de dépilage.

Pour plus de clarté, les mêmes éléments portent les mêmes références sur toutes les figures.

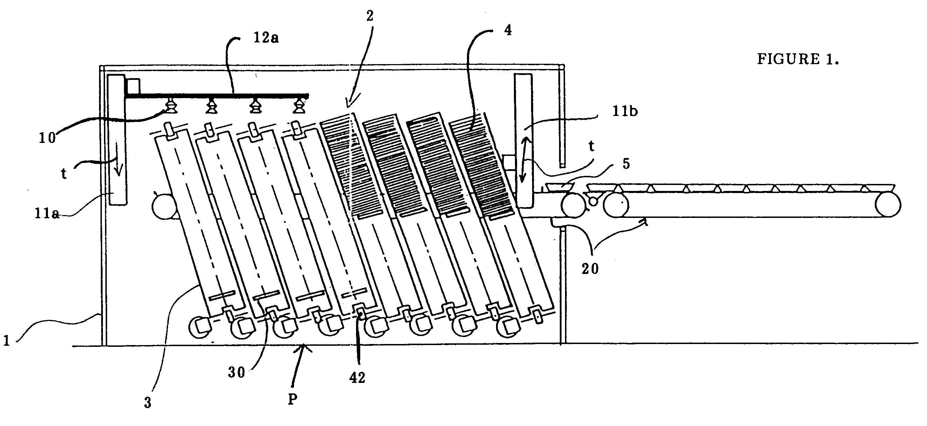

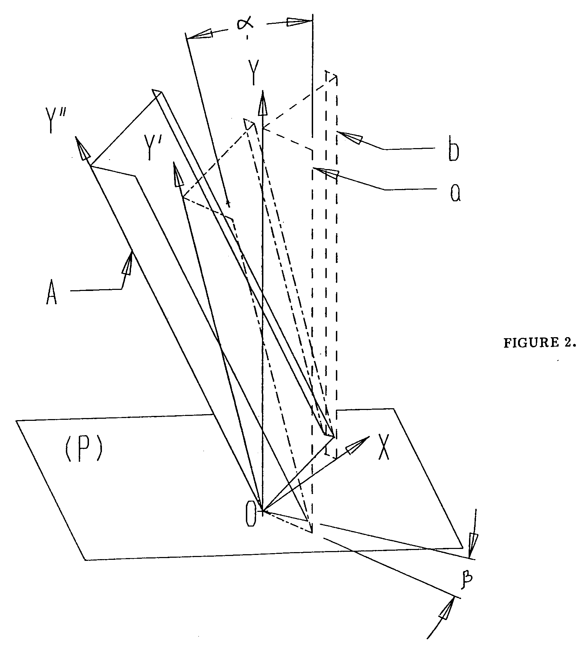

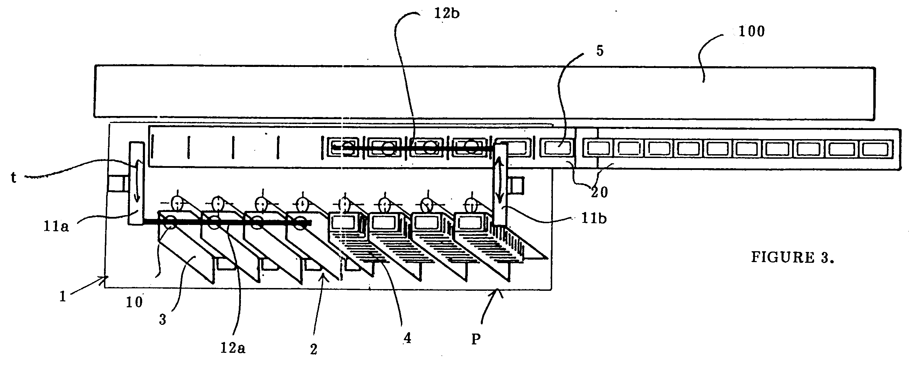

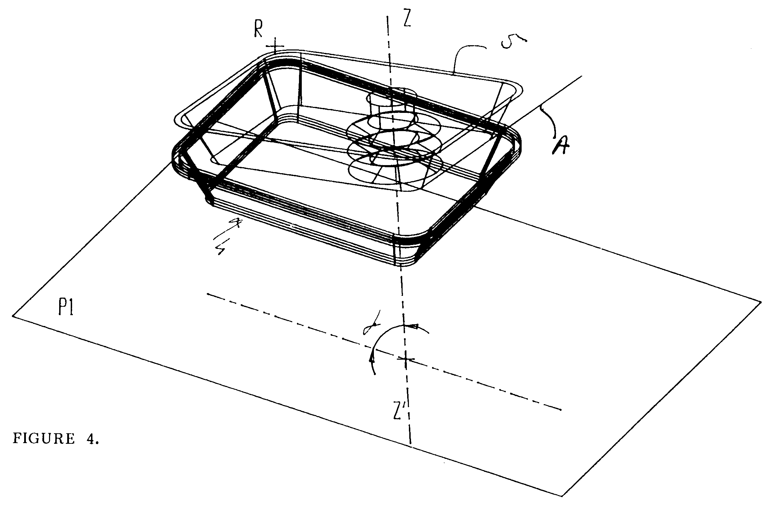

Comme le montrent les figures 1 et 3, complétées par les figures 2 et 4, un dispositif de dépilage selon l'invention comprend :
- un châssis (1) dans lequel est inséré un magasin (2) comprenant au moins un chargeur contenant une pile (4) de barquettes (5) ; dans l'exemple représenté sur les figures 1 et 3, ce magasin (2) comporte à titre d'exemple non limitatif une batterie de huit (n = 8) de ces chargeurs référencés (3) ;
- au moins un bras de dépilage (11a) portant une rampe d'aspiration (12a) coopérant avec une série de ventouses (10), à raison d'une ventouse par chargeur.

Dans l'exemple décrit, il y a donc huit ventouses référencées (10), réparties en deux groupes de quatre, solidaires respectivement de deux bras (11a, 11b) et de deux rampes (12a, 12b) articulés pour amener les ventouses face à la pile (4) de barquettes concernées selon une position plus clairement visible sur la figure 4, et pour transférer chaque barquette (5) aspirée, sur un convoyeur (20). Le long de ces bras (11a) et (11b), les rampes (12a) et (12b) sont également capables d'effectuer un mouvement de translation (t) le long d'un axe vertical pour occuper une place dite de repos ou de travail.

Outre ces chargeurs (3) recevant les piles (4) de barquettes (5) et les combinaisons rampe-ventouses, le dispositif conforme à l'invention comprend également en bas de chaque chargeur une plaque-support (30) de pile (4) qui accompagne la pile au fur et à mesure que les barquettes se trouvent prélevées et transférées.

Selon une caractéristique de l'invention plus clairement illustrée sur la figure 2, chaque chargeur (3) est constituée de deux ailes (a) et (b) montées à 90° l'une par rapport à l'autre et rendues solidaires l'une de l'autre le long de leur intersection pour former une arête (A).

Ce chargeur, comme cela est schématiquement illustrée au moyen de la figure 2, est orienté par rapport à l'embase du châssis (1) servant de plan (P) de référence selon deux angles (α) et (β).

La représentation en pointillés simule un chargeur dont l'arête (A), confondue avec l'axe (OY), serait perpendiculaire audit plan (P).

Cette colonne subit autour du point (O) une rotation selon l'angle (α) qui amène l'axe (OY) sur un axe (OY'). Cet état intermédiaire est schématiquement évoqué en traits interrompus.

Le chargeur subit, en plus, un basculement autour du point (O) selon l'angle (β) ce qui amène l'axe (OY) sur un axe (OY'') : c'est la position définitive qu'occuperont chacun des chargeurs dans le magasin (2) décrit précédemment et qui est représentée en traits pleins sur la figure 3.

Deux ailes (a, b) de dimensions différentes ont été représentées ; en fait, il s'agit d'une représentation schématique destinée à faciliter la compréhension de la figure, mais ces deux ailes peuvent être de dimensions égales.

La combinaison de ce basculement et de cette rotation conduit l'arête (A) dans une position telle qu'à son tour, l'arête de chacune des barquettes introduites dans le chargeur vient automatiquement se plaquer contre celle-ci. Cette double inclinaison fait donc que quelque soit le format de la barquette, on retrouve toujours la même position de référence pour le dépilage.

Il s'ensuit également qu'un seul modèle de chargeur peut recevoir toute sorte de formats différents de barquettes sans qu'il soit nécessaire de prévoir des moyens d'adaptation pour chaque modèle, d'où la possibilité également de prévoir une batterie de (n) chargeurs ce qui accroît de manière sensible le rendement.

Comme le montre notamment la figure 1, et comme cela a été dit ci-dessus, les moyens qui assurent la remontée de la pile de barquettes au fur et à mesure du dépilage sont constitués d'une plaque-support (30) associée par exemple à un vérin (42) capable de lui assurer une course allant d'un point bas (lorsque la pile est complète), vers un point haut correspondant à la fin du dépilage.

Selon une caractéristique de l'invention, cette plaque-support (30) occupe une position, tenant compte des angles (α) et (β), choisie de manière à être parallèle à celle qu'occupe le fond des barquettes en appui sur l'arête (A) du chargeur. Comme le montre la figure 4, l'axe (ZZ') de la dépression à travers chaque ventouse étant par construction perpendiculaire au plan de référence (P), et le fond des barquettes étant parallèle à un plan (P₁), l'aspiration des barquettes se fait un peu en biais selon l'axe (ZZ') faisant un angle (j) avec ledit plan (P₁), cet angle (j) étant lui-même fonction des angles (α) et (β) précédemment décrits. Il en résulte que la barquette effectue une rotation autour du point (R) au cours du soulèvement, ce qui facilite le décollement de la barquette en cours de dépilage de celle qui suit et sur laquelle elle reposait initialement ; le décollement de cette dernière est ainsi évité au maximum.

La figure 3 illustre une séquence de fonctionnement d'un dispositif de dépilage à chargeurs doublement inclinés conformément à l'invention, sachant que le nombre de 8 chargeurs n'est donné qu'à titre d'exemple pour le magasin de stockage (2) représenté.

Sur cette figure 3, le dépilage des barquettes est terminé pour les chargeurs (3) du premier groupe, (rampe 12a), tandis que la rampe (12b) est en phase de dépilage des chargeurs (3) du second groupe pour les déposer sur le convoyeur (20) qui se trouve face à un second convoyeur (100) chargé d'acheminer les produits à emballer dans les barquettes (5). La première série de chargeurs peut être rechargée en temps masqué durant la phase de dépilage de la seconde série dans le cas où le magasin (2) est fixe et solidaire du châssis (1). Si ce magasin (2) est monté sur roulettes, ce chargement se fera batterie par batterie de (n) chargeurs (3).

Les caractéristiques et avantages procurés par la mise en oeuvre d'un dispositif de dépilage et d'une machine conforme à l'invention, bien qu'ayant déjà été soulignés, sont repris ci-après.

On doit noter l'absence de règlage des magasins quelque soit le format des barquettes grâce à l'inclinaison des deux plans de contact des barquettes dans les magasins de stockage. De plus, la pile de barquettes vides est inclinée par rapport à la ventouse de dépilage, ce qui permet d'éviter le décollement de la seconde barquette lors de l'aspiration de la première. Enfin, quelque soit le format des barquettes, leur position a toujours comme référence l'angle d'intersection (arête A) des ailes de contact inclinées du chargeur, ce qui permet d'avoir toujours la même position de référence à l'aspiration ainsi qu'à la dépose.

Il faut également noter que l'on peut avoir de grandes colonnes de barquettes vides et donc un stock maximum.

L'invention s'applique notamment dans le domaine de l'agro-alimentaire.

## Revendications

1. Dispositif de dépilage automatique de barquettes comprenant un magasin (2) recevant en pile des barquettes vides (5), au moins une ventouse en dépression (10) disposée au-dessus des barquettes et capable de séparer les barquettes une par une en vue de les déposer sur un convoyeur et un dispositif (30, 42) capable de remonter les barquettes durant la phase de dépilage ; caractérisé en ce que le magasin (2) comporte au moins un chargeur (3) auquel est associée une ventouse (10), le chargeur (3) étant constitué par deux ailes (a, b) rendues solidaires l'une de l'autre selon un angle de 90° pour former une arête (A), et un moyen d'orientation du chargeur par rapport à l'embase du châssis (1) servant de plan de référence (P) grâce auquel le chargeur subit à partir d'une position perpendiculaire au plan (P) une rotation d'angle α dans un premier plan plus un basculement d'angle β dans un deuxième plan différent du premier, la combinaison de ce basculement et de cette rotation conduisant l'arête (A) dans une position telle qu'à son tour, l'arête de chacune des barquettes introduites dans le chargeur vienne automatiquement se plaquer contre celle-ci.

2. Dispositif de dépilage selon la revendication 1, caractérisé en ce que l'axe (ZZ') de la ventouse (10) associée à chaque chargeur (3) est perpendiculaire audit plan de référence (P) et fait donc avec un plan (P₁) parallèle au fond des barquettes un angle j résultant des angles α et β, cet axe (ZZ') étant rapproché de l'arête (A) de telle sorte que la barquette aspirée effectue un pivotement au cours du soulèvement, ce qui facilite son décollement d'avec la barquette qui suit et sur laquelle elle reposait initialement.

3. Dispositif selon l'une des revendications précédentes ; caractérisé en ce que les chargeurs (3) sont répartis en deux groupes, chacun des groupes coopérant avec une rampe d'aspiration (12a), (12b) montée sur un bras (11a, 11b) et programmée de telle sorte que lorsque le dépilage du premier groupe est terminé, le bras (11b) correspondant au second groupe est déplacé et la rampe de dépression (12b) concernée mise en position de dépilage.

4. Dispositif selon l'une des revendications 1 à 3 ; caractérisé en ce que le remplissage en temps masqué du premier groupe se fait durant la phase de dépilage du deuxième groupe.

5. Dispositif selon l'une des revendications 2 à 4 ; caractérisé en ce que les chargeurs (3) associés en batterie pour former le magasin (2) sont solidaires du châssis (1).

6. Dispositif selon l'une des revendications 1, 2 et 3 ; caractérisé en ce que les chargeurs (3) associés en batterie pour former le magasin (2) sont amovibles.

## Claims

1. A device for the automatic unstacking of trays comprising a magazine (2) receiving stacked empty trays (5), at least one vacuum-type suction cup (10) arranged above the trays and capable of separating the trays one by one with a view to depositing them on a conveyor and a device (30, 42) capable of raising the trays during the unstacking phase; characterised in that the magazine (2) comprises at least one loader (3) with which a suction cup (10) is associated, the loader (3) being constituted by two wings (a, b) made integral with each other at an angle of 90° to form an edge (A), and a means for directing the loader in relation to the seating of the frame (1) serving as a reference plane (P) by means of which the loader undergoes, starting from a position perpendicular to the plane (P), a rotation by an angle α in a first plane then a tilting by an angle β in a second plane, different from the first, the combination of this tilting and this rotation taking the edge (A) to a position such that, in its turn, the edge of each of the trays inserted in the loader is automatically held against said edge (A).

2. An unstacking device according to Claim 1, characterised in that the axis (ZZ') of the suction cup (10) associated with each loader (3) is perpendicular to said reference plane (P) and therefore forms, with a plane (P₁) parallel to the bottom of the trays, an angle j resulting from the angles α and β, this axis (ZZ') being brought near the edge (A) such that the tray being sucked pivots as it is raised, which makes it easier to disengage it from the following tray, on which it initially rested.

3. A device according to one of the preceding claims; characterised in that the loaders (3) are distributed into two groups, each of the groups co-operating with a suction bank (12a), (12b) mounted on an arm (11a, 11b) and programmed in such a way that, when the unstacking of the first group is finished, the arm (11b) corresponding to the second group is displaced and the vacuum bank (12b) in question is placed in the unstacking position.

4. A device according to one of Claims 1 to 3; characterised in that the filling in background by the first group takes place during the unstacking phase of the second group.

5. A device according to one of Claims 2 to 4; characterised in that the loaders (3) combined as a set to form the magazine (2) are integral with the frame (1).

6. A device according to one of Claims 1, 2 and 3; characterised in that the loaders (3) combined as a set to form the magazine (2) are removable.

## Patentansprüche

1. Vorrichtung zum automatischen Entstapeln von Schalen, mit einem Magazin (2), das leere Schalen (5) gestapelt aufnimmt, wenigstens einer Unterdruck-Saugvorrichtung (10), die oberhalb der Schalen angeordnet und in der Lage ist, die Schalen einzeln voneinander zu trennen, um sie auf einer Fördervorrichtung abzulegen, und einer Vorrichtung (30, 42), die in der Lage ist, die Schalen während der Phase des Entstapelns anzuheben, dadurch gekennzeichnet, daß das Magazin (2) wenigstens eine Beladevorrichtung (3) enthält, der eine Saugvorrichtung (10) zugeordnet ist, wobei die Beladevorrichtung (3) durch zwei Flügel (a, b) gebildet ist, die fest miteinander in einem Winkel von 90° verbunden sind, um eine Kante (A) zu bilden, sowie Mittel zur Ausrichtung der Beladevorrichtung bezüglich des Sockels des als Referenzebene (P) dienenden Rahmens (1), die die Beladevorrichtung ausgehend von einer zur Ebene (P) senkrechten Stellung um einen Winkel α in einer ersten Ebene drehen sowie um einen Winkel β in einer von der ersten Ebene unterschiedlichen zweiten Ebene kippen, wobei die Kombination dieses Kippens und Drehens die Kante (A) in eine solche Stellung überführt, daß die Kante jeder in die Beladevorrichtung eingebrachten Schale sich automatisch an diese Kante anlegt.

2. Vorrichtung zum Entstapeln nach Anspruch 1, dadurch gekennzeichnet, daß die Achse (ZZ') der jeder Beladevorrichtung (3) zugeordneten Saugvorrichtung (10) senkrecht zur Referenzebene (P) ist und somit mit einer zum Boden der Schalen parallelen Ebene (P₁) einen Winkel j einschließt, der aus den Winkeln α und β resultiert, wobei diese Achse (ZZ') so an die Kante (A) angenähert ist, daß die angesaugte Schale im Verlauf des Anhebens ein Verschwenken ausführt, was ihr Abheben von der nachfolgenden Schale erleichtert, auf der sie ursprünglich geruht hat.

3. Vorrichtung nach einem der vorhergehenden Ansprüche, dadurch gekennzeichnet, daß die Beladevorrichtungen in zwei Gruppen verteilt sind, wobei jede der Gruppen mit einer Ansaugrampe (12a), (12b) zusammenwirkt, die an einem Arm (11a, 11b) angeordnet und so programmiert ist, daß dann, wenn das Entstapeln der ersten Gruppe beendet ist, der entsprechende Arm (11b) der zweiten Gruppe verstellt und die betreffende Unterdruckrampe (12b) in die Stellung des Entstapelns gebracht ist.

4. Vorrichtung nach einem der Ansprüche 1 bis 3, dadurch gekennzeichnet, daß das Auffüllen in der abgedeckten Zeit der ersten Gruppe während der Phase des Entstapelns der zweiten Gruppe ausgeführt wird.

5. Vorrichtung nach einem der Ansprüche 2 bis 4, dadurch gekennzeichnet, daß die Beladevorrichtungen (3), die zur Bildung des Magazins (2) als Batterie zusammengefaßt sind, fest mit dem Rahmen (1) verbunden sind.

6. Vorrichtung nach einem der Ansprüche 1, 2 und 3, dadurch gekennzeichnet, daß die Beladevorrichtungen (3), die zur Bildung des Magazins (2) als Batterie zusammengefaßt sind, entfernbar sind.
